# EUROPEAN PATENT SPECIFICATION

(11) **EP 3 984 606 B1**
(45) Date of publication and mention of the grant of the patent: **21.06.2023**
(21) Application number: 20201892.5
(22) Date of filing: 14.10.2020
(51) Int. Cl.: A63F 9/00, A63F 9/24, A63B 67/12, A63H 27/00, A63F 13/00

(54) **TOY**
SPIELZEUG
JOUET

(43) Date of publication of application: 20.04.2022
(73) Proprietor: Seehaus, Timo, 71638 Ludwigsburg (DE)
(72) Inventor: Seehaus, Timo, 71638 Ludwigsburg (DE)
(74) Representative: Meyer zu Bexten, Elmar

(56) References cited:
- WO-A1-2013/117173
- DE-A1- 19 702 012
- US-A1- 2017 189 768
- US-A1- 2019 104 970

## Description

### Technical Field

The invention pertains to the product as defined in claim 1.

### Background Art

A coaster, drink coaster, beverage coaster, or beermat protects a tabletop or any other surface from the vessel rested thereupon, absorbs condensation dripping along the glass, or serves as an ad-hoc notepad. Coasters placed on top of a beverage may also be employed to show that a drink is yet unfinished or to prevent contamination such as from insects. Electronically enhanced coasters find application, for example, in health maintenance support (cf. NPL1).

Usually spread out in pubs, coasters have long been augmented with game elements or used as toys (cf. PTL1). For instance, a player may position his or her fingers underneath a coaster balanced gingerly on the edge of a bar or table. With a quick upsweep of the hand, the coaster is flicked into the air, allowed to flip at least 180 degrees, and finally caught using the same hand.

PTL2 discloses the product as per the preamble of claim 1.

### Summary of invention

By incorporating sensors, actuators, an intelligent design, and establishing data exchange, in conjunction with trajectory analysis, linkage to a receiving device such as a cell phone, and presentation of information such as through an app, embodiments of the invention expand upon the traditional gameplay of coaster flipping.

### Technical Problem

The invention aims to provide the player with increased enjoyment and advanced gaming functionality while enabling additional services throughout the hospitality industry.

### Solution to Problem

The problem is solved as per the characterizing portion of claim 1.

### Advantageous effect of invention

Use of an apparatus as claimed allows for an emotionally stimulating and playful experience, whether for a single player or, especially where several toys as described below are interconnected, in a group setting. Through its flat shape and customizable appearance, each toy may double as a coaster uniquely marking its owner's drink and distinguishing it from those of his companions.

### Brief description of drawings

Figure 1 is a perspective view of a toy.
Figure 2 illustrates a gameplay involving the toy.
Figure 3 is a schematic view of a printed circuit board of the toy.
Figure 4 is a partial section of the toy being operated.

### Description of embodiments

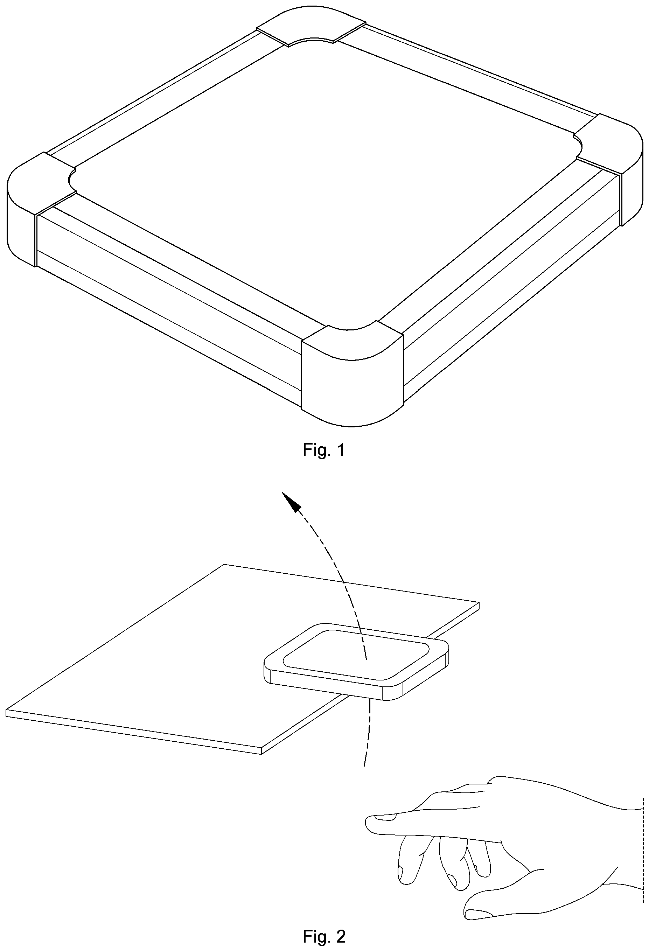

Figure 1 depicts a toy of flat shape and compact dimensions whose housing consists of bilateral coasters serving as an upper and lower shell, which may be exchanged for custom designs or special motifs. The four corners of the toy are protected by detachable bumpers that may be replaced with bumpers of different color. In an alternative embodiment, the shells may be framed by a transparent rubber sleeve instead of providing corner bumpers.

As is shown in Figure 2, the resulting toy, if balanced on the edge of a surface, is sufficiently lightweight to be flicked into the air with a quick upsweep of a single hand. To this end, the device is composed of coordinated materials that yield optimum flight and acceleration characteristics.

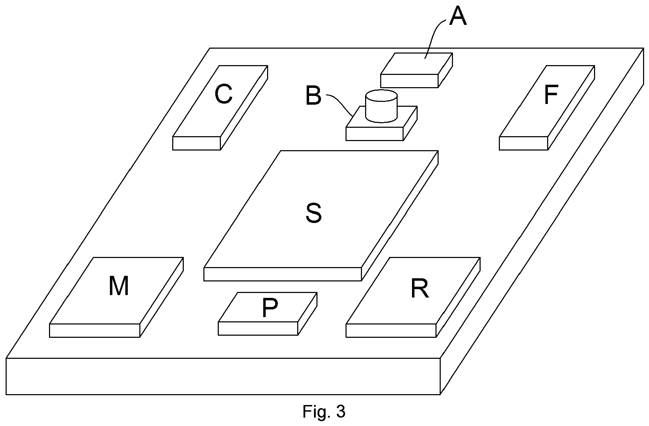

Figure 3 elucidates the electronics assembly of the toy. As may be gathered from this drawing, the device comprises a centrally arranged power source (S) such as a battery that allows for wireless charging through a power and charging module (P). Further provided are a motion sensor (M) for acquiring movement information and unit (R) for computing, based on said information, given flight characteristics - such as the number of flips performed, magnitude and direction of acceleration along preferably six axes, or total acceleration - of the toy as well as for detecting whether the latter is caught or dropped.

The flight characteristics, once computed, may be visualized by means of a display (A) and optionally transmitted via a radio unit (F) that would also permit for over-the-air (OTA) firmware update, such as by means of a wireless local area network or mobile Internet. In a preferred embodiment, several such toys might be paired using built-in near-field communication (NFC) tags, whereupon the linked-up users could team up or compete against each other in a parlor game. In this case, the display (A) may acknowledge the pairing, for instance, through matching illumination among all participants of the respective game. The skilled person will appreciate that similar functionality may be provided by means of a smartphone app accompanying the toy.

An advanced embodiment may further comprise an actuator for changing the flight characteristics, such as by means of weight shift, directional impulse, or aerodynamic distortion. In such embodiment, the computing unit (R) would further control the actuator based on the movement information - for instance such that, at a certain altitude, the rate of fall is reduced or the airborne toy returns to its origin atop a table or bar. In case of an imminent collision with the tabletop, said actuator may even serve to adjust the hazardous trajectory of the toy. The same could be achieved by means of miniature rotors, which would further extend the flight characteristics such as by causing the toy to perform additional and faster flips or momentarily levitate in mid-air. A generic connector (C) may be provided for these and other optional parts.

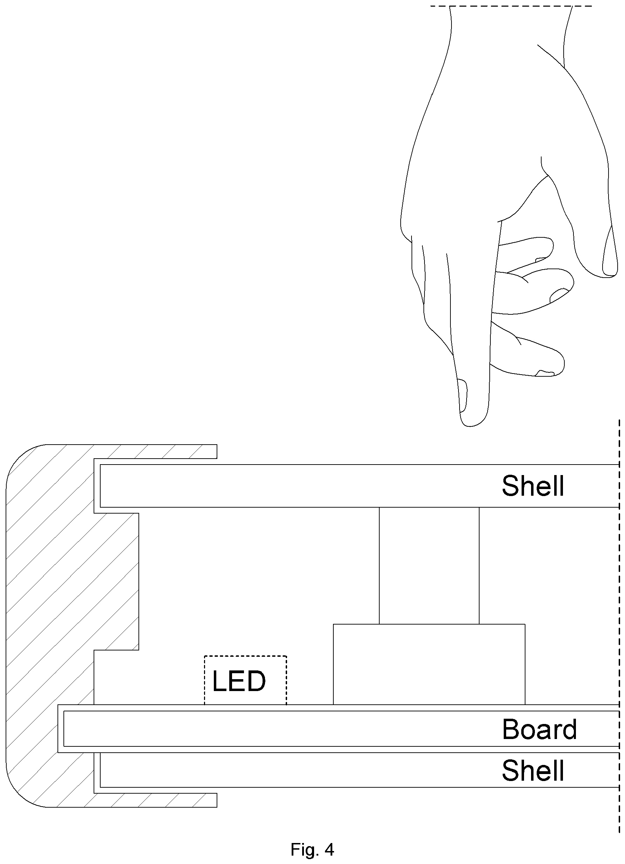

Finally, Figure 4 exemplifies the toy's dimensions and user interface. In the present embodiment, a pushbutton operable via the yieldable upper shell is used to reset the acquired movement information and prepare the toy for flipping. Its modular design allows for retrofitting of mechanical components or electronics such as additional power sources, radio links, positioning sensors, light color and brightness sensors, temperature sensors, further sensors for determining the flight characteristics, further actuators for manipulating the flight characteristics, or further display (A) and operating elements (B). Preferably, all these components are arranged within the housing such as to achieve equilibrium of the toy.

### Industrial applicability

The invention is applicable, inter alia, throughout the entertainment, hospitality, and electronics industries.

### Reference signs list

- S: Power source
- R: Computing unit
- M: Motion sensor
- F: Radio unit
- A: Display
- B: Operating element
- C: Connector for optional parts
- P: Power and charging module

### Citation list

The following documents are cited hereinbefore.

### Patent literature

PTL1: DE 441900 C (LOUIS MARQUIS JR) 16.03.1927
PTL2: US 2019104970 A (CRONIN HUNTER [US]) 11.04.2019

### Non-patent literature

NPL1: GOUKU, Manabu, et al. A Coaster Robot that Encourages Workers to Drink Water. Proceedings of the 5th International Conference on Human Agent Interaction. 2017, p.447-449.

## Claims

1. Flat toy for flipping into air
having
a power source (S) for supplying the toy with power,
a motion sensor (M) for acquiring movement information, and
a computing unit (R) for computing, based on the movement information, flight characteristics such as number of flips performed, magnitude and direction of acceleration along preferably six axes, or total acceleration of the toy,
**characterized in**
a housing consisting of bilateral coasters serving as an upper and lower shell, said coasters being exchangeable for custom designs or special motifs; and four corners being protected by detachable corner bumpers or the shells being framed by a rubber sleeve instead of the corner bumpers.

2. Toy as per Claim 1
**characterized in**
a radio unit (F) for transmitting the flight characteristics or applying over-the-air updates.

3. Toy as per Claim 2
**characterized in**
a near-field communication tag for pairing the toy with further toys, wherein
the computing unit (R) is adapted to, by means of the radio unit (F), participate in a parlor game involving the further toys, such as by comparing the flight characteristics or pursuing common game targets.

4. Toy as per Claim 3
**characterized in**
a display (A), such as a light-emitting diode, for displaying the flight characteristics and acknowledging the pairing, such as through matching illumination among participants of the game.

5. Toy as per any of the preceding claims
**characterized in**
a connector (C) connected with a positioning sensor,
an actuator for changing the flight characteristics, such as by means of a weight shift, directional impulse, or aerodynamic distortion, wherein
the computing unit (R) is further adapted to control the actuator based on the movement information such that the toy returns to an origin or, preferably at a certain altitude, the rate of fall is reduced.

6. Toy as per Claim 5
**characterized in**
a power and charging module (P), wherein
the power source (S) comprises a battery adapted to recharge, preferably wirelessly, by means of the module (P).

7. Toy as per any of the preceding claims
**characterized in that**
the computing unit (R) is further adapted to, based on the movement information, detect whether the toy is caught or dropped.

8. Toy as per any of the preceding claims
**characterized in**
miniature rotors for extending the flight characteristics such as by performing additional and faster flips or momentary levitation.

9. Toy as per any of Claim 5, Claim 6, or Claim 8
**characterized in that**
the computing unit (R) is further adapted to adjust any hazardous trajectory of the toy using the actuator or the miniature rotors, such as in case of imminent collision.

10. Toy as per any of the preceding claims
**characterized in**
a connector (C) for optional parts such as additional power sources, radio links, positioning sensors, light color and brightness sensors, temperature sensors, further sensors for determining the flight characteristics, further actuators for manipulating the flight characteristics, or further operating and display elements.

11. Toy as per any of the preceding claims
**characterized in that**
at least the power source (S), motion sensor (M), and computing unit (R) are arranged such as to achieve equilibrium of the toy.

12. Toy as per any of the preceding claims
**characterized in**
an operating element (B) for operating the toy, for example, resetting the movement information.

13. Toy as per Claim 12
**characterized in**
a yieldable upper shell, wherein
the operating element (B) is a pushbutton operable via the shell.

## Patentansprüche

1. Flaches Spielzeug zum in die Luft Schnippen
mit
einer Energiequelle (S) zur Versorgung des Spielzeugs mit Energie, einem Bewegungssensor (M) zum Erfassen von Bewegungsinformationen und einer Recheneinheit (R) zum Berechnen von Flugeigenschaften anhand der Bewegungsinformationen, beispielsweise Anzahl der vollführten Überschläge, Betrag und Richtung der Beschleunigung entlang vorzugsweise sechs Achsen oder Gesamtbeschleunigung des Spielzeugs,
**gekennzeichnet durch**
ein Gehäuse aus beidseitig angeordneten Deckeln, die als Gehäuseober- und -unterteil dienen und gegen individuelle Aufmachungen oder besondere Gestaltungselemente austauschbar sind, und
vier durch lösbare Puffer geschützte Ecken oder ein die Gehäuseteile einfassendes Gummiband anstelle der Puffer.

2. Spielzeug nach Anspruch 1,
**gekennzeichnet durch**
eine Funkeinheit (F) zur Übertragung der Flugeigenschaften oder zur Aktualisierung per Luftschnittstelle.

3. Spielzeug nach Anspruch 2,
**gekennzeichnet durch**
einen Nahfeldkommunikations-Transponder zur Kopplung des Spielzeugs mit weiteren Spielzeugen, wobei
die Recheneinheit (R) dazu eingerichtet ist, mittels der Funkeinheit (F) beispielsweise durch Vergleich der Flugeigenschaften oder Verfolgung gemeinsamer Spielziele an einem Gesellschaftsspiel mit den weiteren Spielzeugen teilzunehmen.

4. Spielzeug nach Anspruch 3
**gekennzeichnet durch**
eine Anzeige (A), beispielsweise eine Leuchtdiode, zur Darstellung der Flugeigenschaften und zur Bestätigung der Kopplung beispielsweise durch eine zwischen den Mitspielern übereinstimmende Beleuchtung.

5. Spielzeug nach einem der vorigen Ansprüche,
**gekennzeichnet durch**
einen mit einem Lagesensor verbundenen Anschluss (C),
ein Stellglied zur Beeinflussung der Flugeigenschaften, beispielsweise durch
eine Gewichtsverlagerung, einen Richtungsimpuls oder aerodynamische Verformung, wobei
die Recheneinheit (R) ferner dazu eingerichtet ist, das Stellglied anhand der Bewegungsinformationen so zu steuern, dass das Spielzeug zum Ausgangspunkt zurückkehrt oder, vorzugsweise in einer bestimmten Höhe, die Sinkgeschwindigkeit vermindert wird.

6. Spielzeug nach Anspruch 5,
**gekennzeichnet durch**
ein Energie- und Lademodul (P), wobei
die Energiequelle (S) eine Batterie umfasst, die mittels des Moduls (P) vorzugsweise drahtlos aufgeladen werden kann.

7. Spielzeug nach einem der vorigen Ansprüche,
**dadurch gekennzeichnet, dass**
die Recheneinheit (R) ferner dazu eingerichtet ist, anhand der Bewegungsinformationen zu erkennen, ob das Spielzeug aufgefangen oder fallengelassen wird.

8. Spielzeug nach einem der vorigen Ansprüche,
**gekennzeichnet durch**
Kleinstrotoren zur Erweiterung der Flugeigenschaften beispielsweise durch zusätzliche und schnellere Überschläge oder kurzzeitiges Schweben.

9. Spielzeug nach einem der Ansprüche 5, 6 oder 8,
**dadurch gekennzeichnet, dass**
die Recheneinheit (R) ferner dazu eingerichtet ist, eine gegebenenfalls gefährliche Flugbahn des Spielzeugs mittels des Stellglieds oder der Kleinstrotoren beispielsweise im Falle eines drohenden Aufpralls zu beeinflussen.

10. Spielzeug nach einem der vorigen Ansprüche,
**gekennzeichnet durch**
einen Anschluss (C) für Zubehör wie zusätzliche Energiequellen, Funkanbindungen, Lagesensoren, Farb- und Helligkeitssensoren, Temperatursensoren, weitere Sensoren zur Bestimmung der Flugeigenschaften, weitere Stellglieder zur Beeinflussung der Flugeigenschaften oder weitere Bedien- und Anzeigeelemente.

11. Spielzeug nach einem der vorigen Ansprüche,
**dadurch gekennzeichnet, dass**
zumindest die Energiequelle (S), der Bewegungssensor (M) und die Recheneinheit (R) so angeordnet sind, dass das Spielzeug sich im Gleichgewicht befindet.

12. Spielzeug nach einem der vorigen Ansprüche,
**gekennzeichnet durch**
ein Bedienelement (B) zur Bedienung des Spielzeugs, beispielsweise zum Zurücksetzen der Bewegungsinformationen.

13. Spielzeug nach Anspruch 12,
**gekennzeichnet durch**
ein nachgiebiges Gehäuseoberteil, wobei
das Bedienelement (B) ein über das Gehäuseoberteil bedienbarer Taster ist.

## Revendications

1. Jouet plat à faire basculer dans l'air
avec
une source d'alimentation (S) pour alimenter le jouet en énergie,
un capteur de mouvement (M) pour acquérir des informations de mouvement, et
une unité de calcul (R) pour calculer, sur la base des informations de mouvement, des caractéristiques de vol telles que le nombre de flips effectués, l'amplitude et la direction de l'accélération le long de préférence de six axes, ou l'accélération totale du jouet,
**caractérisé par**
un boîtier constitué de dessous bilatéraux servant de coque supérieure et inférieure,
lesdits dessous étant interchangeables pour des dessins personnalisés ou des motifs spéciaux ; et
les quatre coins étant protégés par des butoirs détachables ou les coques étant encadrées par une manchette élastique au lieu des butoirs.

2. Jouet selon la revendication 1,
**caractérisé par**
une unité radio (F) pour transmettre les caractéristiques de vol ou appliquer des mises à jour par voie hertzienne.

3. Jouet selon la revendication 2,
**caractérisé par**
une étiquette de communication en champ proche pour apparier le jouet avec d'autres jouets, dans laquelle
l'unité de calcul (R) est adaptée pour, au moyen de l'unité radio (F), participer à un jeu de société impliquant les autres jouets, par exemple en comparant les caractéristiques de vol ou en poursuivant des cibles de jeu communes.

4. Jouet selon la revendication 3,
**caractérisé par**
un affichage (A), tel qu'une diode électroluminescente, pour afficher les caractéristiques de vol et reconnaître l'appariement, par exemple en faisant correspondre l'éclairage entre les participants du jeu.

5. Jouet selon l'une quelconque des revendications précédentes,
**caractérisé par**
un connecteur (C) relié à un capteur de positionnement,
un actionneur pour modifier les caractéristiques de vol, par exemple au moyen d'un déplacement de poids, d'une impulsion directionnelle ou d'une distorsion aérodynamique, dans lequel
l'unité de calcul (R) est en outre adaptée pour commander l'actionneur sur la base des informations de mouvement de telle sorte que le jouet retourne à une origine ou, de préférence à une certaine altitude, le taux de chute est réduit.

6. Jouet selon la revendication 5,
**caractérisé par**
un module d'alimentation et de charge (P), dans lequel
la source d'alimentation (S) comprend une batterie adaptée pour se recharger, de préférence sans fil, au moyen du module (P).

7. Jouet selon l'une quelconque des revendications précédentes,
**caractérisé en ce que**
l'unité de calcul (R) est en outre adaptée pour, sur la base des informations de mouvement, détecter si le jouet est attrapé ou lâché.

8. Jouet selon l'une quelconque des revendications précédentes,
**caractérisé par**
des rotors miniatures pour étendre les caractéristiques de vol, par exemple en effectuant des flips supplémentaires et plus rapides ou une lévitation momentanée.

9. Jouet selon l'une quelconque des revendications 5, 6 ou 8,
**caractérisé en ce que**
l'unité de calcul (R) est en outre adaptée pour ajuster toute trajectoire dangereuse du jouet en utilisant l'actionneur ou les rotors miniatures, par exemple en cas de collision imminente.

10. Jouet selon l'une quelconque des revendications précédentes,
**caractérisé par**
un connecteur (C) pour des pièces optionnelles telles que des sources supplémentaires d'alimentation, des liaisons radio, des capteurs de positionnement, des capteurs de couleur et de luminosité de la lumière, des capteurs de température, d'autres capteurs pour déterminer les caractéristiques de vol, d'autres actionneurs pour manipuler les caractéristiques de vol, ou d'autres éléments de commande et d'affichage.

11. Jouet selon l'une quelconque des revendications précédentes,
**caractérisé en ce que**
au moins la source d'alimentation (S), le capteur de mouvement (M) et l'unité de calcul (R) sont disposés de manière à obtenir l'équilibre du jouet.

12. Jouet selon l'une quelconque des revendications précédentes,
**caractérisé par**
un élément de commande (B) pour faire fonctionner le jouet, par exemple pour réinitialiser les informations de mouvement.

13. Jouet selon la revendication 12,
**caractérisé par**
une coque supérieure souple, dans laquelle
l'élément de commande (B) est un bouton-poussoir pouvant être actionné par l'intermédiaire de la coque.
